# EUROPEAN PATENT SPECIFICATION

(11) **EP 1 819 540 B1**
(45) Date of publication and mention of the grant of the patent: **17.08.2011**
(21) Application number: 05792453.2
(22) Date of filing: 20.10.2005
(51) Int. Cl.: B60H 1/22, H05B 3/50

(54) **ELECTRIC AIR HEATER**
ELEKTRISCHER LUFTERHITZER
RECHAUFFEUR D'AIR ELECTRIQUE

(30) Priority: 02.12.2004 SI 200400327
(43) Date of publication of application: 22.08.2007
(73) Proprietor: HIDRIA AET Druzba za proizvodnjo vzignih sistemov in elektronike d.o.o., 5220 Tolmin (SI)
(72) Inventor: REJC, Davorin, 5220 Tolmin (SI); SKOCIR, Iztok, 5222 Kobarid (SI); URBAS, Janez, 5220 Tolmin (SI)
(74) Representative: Grünecker, Kinkeldey, Stockmair & Schwanhäusser Anwaltssozietät
(86) International application number: PCT/SI2005/000031
(87) International publication number: WO 2006/059960

(56) References cited:
- DE-A1- 10 143 852
- DE-A1- 19 922 668
- US-A- 5 256 857
- US-A1- 2004 200 829

## Description

The invention relates to an electric heater for airflow heating, particularly suitable for heating automotive passenger compartments. The radiating elements of the electric heater are made of PTC (Positive Temperature Coefficient) ceramics.

The cabins of motor vehicles are generally heated by means of radiators powered by the hot cooling fluid from the vehicle engine. Recently, for reasons of comfort and air conditioning, additional electric heaters are progressively coming into use. Motor vehicle electric heaters must be small in size and, most importantly, safe. Electrical resistance heaters are not appropriate for this purpose as they involve elevated temperatures and the employment of relatively unreliable thermal switches. The most suitable heating element turned out to be PTC ceramics which increases its resistance at higher temperatures, thereby reducing the heating power and automatically regulating the temperature of the heating element. The overheating of the heater and the related hazards are thus reduced to a minimum. However, the use of PTC ceramics for producing heating elements presents new constructional challenges, particularly as to achieving an engagement of the heating element and the housing that will be tight enough to ensure a good thermal and electrical contact.

Structures are known in the art having a heating element made of PTC ceramics, loaded by either a spring or a deformation pushing it toward an electrically and thermally conductive surface, generally an aluminum panel or rectangular profile. In such cases the thermal contact and the electrical connection are provided by the engagement of the heating element with the aluminum support, and elements such as fins are added to the aluminum support for increasing the surface thereof. The pressure of the heating element onto the support is provided by a spring pressing the heating element onto the support and acting as the second electrical connection at the same time. Such solutions involving the use of a spring and also solutions wherein the pressure of the heating element is achieved by a plastic deformation of a rectangular pipe, with all the elements of the heating body previously embedded into the pipe, are set forth in patent documents EP 1370117, US 5,256,857, and US 2003/0015520. Closest prior art is disclosed in DE 199 22 668 A1.

Prior art solutions exhibit two types of disadvantages: springs lose elasticity over time, thereby increasing the likelihood of a loosened engagement of the heating elements and the support, impairing, in turn, the dissipation of heat, and secondly, such structures require the assemblage and the finalization of the heating bodies i.e. the combination of the support, the heating elements and the springs to be performed beforehand, prior to assembling a plurality of heating bodies into a heater. This means that once a heater contains heating elements and springs, it can no longer be thermally treated. For reasons of better heat dissipation the heater should possess extensive surfaces, which is why the heating bodies should have ribs or fins. To achieve good thermal contact between the heating bodies and the fins, said fins should preferably be soldered to the heating bodies, which is only possible at elevated temperatures that would damage the previously embedded heating bodies.

The object of the invention is a heating body, structured so as to reduce the effects of aging and dynamic stresses of the spring elements, provide for a simple way of assembling the heating elements, and enable fins to be soldered to the heating bodies.

According to the invention, the object is achieved with an automotive electric heater and method according to the independent patent claims.

The invention shall now be described with reference to a preferred embodiment thereof and the accompanying drawings, representing:
Figure 1a: The heater according to the invention;
Figure 1b: A detail of the fixing of the fins to the heating bodies;
Figure 2: The structure of the heating body in cross section;
Figure 3: A detail of the structure of the heating body.

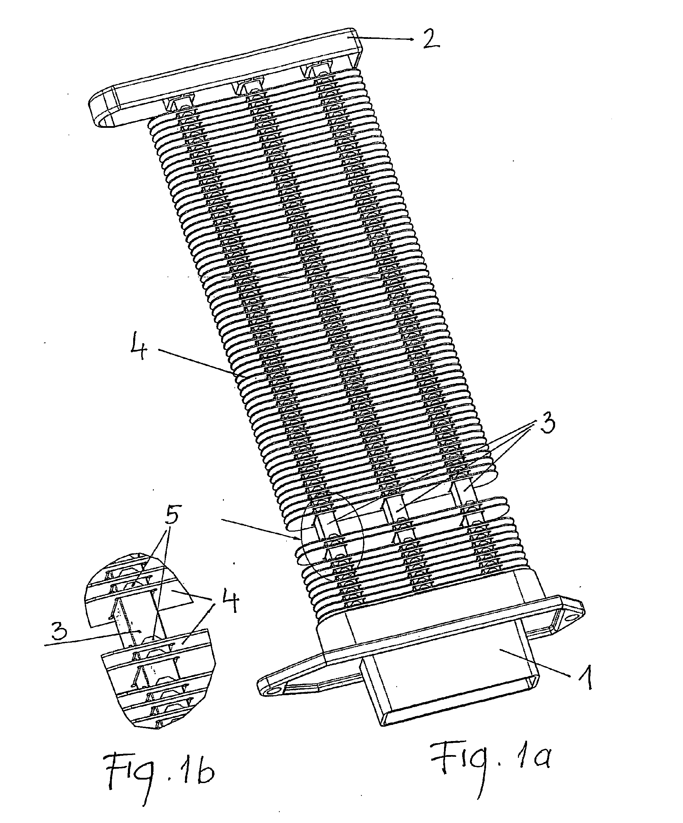

The heater according to the invention and to Fig. 1a is composed of heating bodies 3, mounted between a connecting bracket 1 and a terminating bracket 2. The connecting bracket 1 and the terminating bracket 2 are made of a hard isolation material and serve as supports for the heating bodies 3, the connecting bracket 1 also providing the connection to the source of electric power and the connecting bracket 1 and terminating bracket 2 jointly having the purpose of fixing the heater to its location of utilization within the vehicle. Fins 4 are stacked onto the heating bodies 3. Figure 1b shows a detail wherein the openings of the fins 4 are made so as to form folds 5. The dimensions of the openings of the fins 4 with the folds 5 are such that the fins 4 may be freely stacked onto the heating bodies 3, a gap being left between the folds and the heating bodies as required for soldering, and the spacing between the fins 4 being determined by the lengths of the folds 5. In order to achieve improved mechanical and thermic properties, the fins 4 with folds 5 stacked onto the heating bodies 3 may be soldered to one another according to processes known in the art. PTC ceramics heating elements are not yet embedded into the heating bodies 3 at the time of soldering.

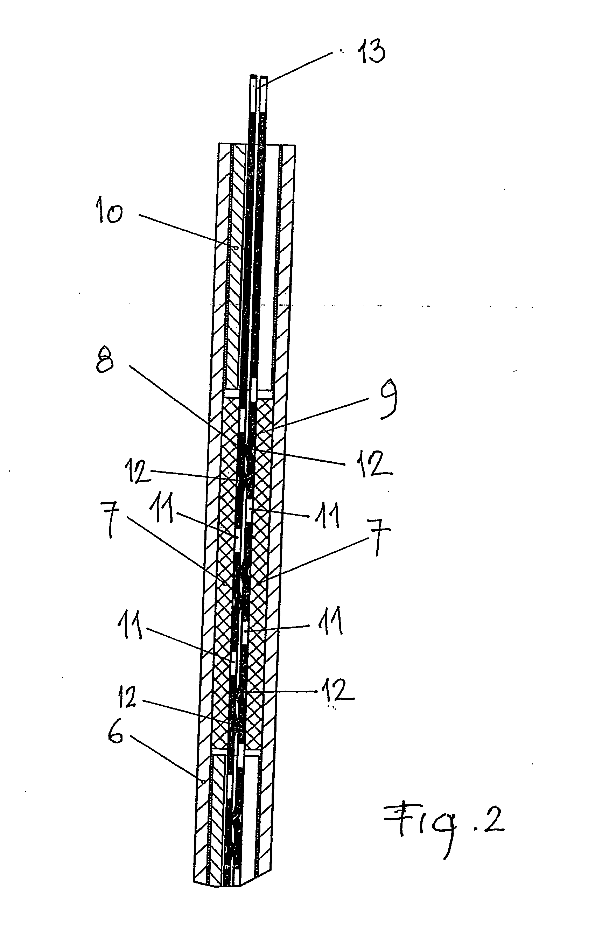

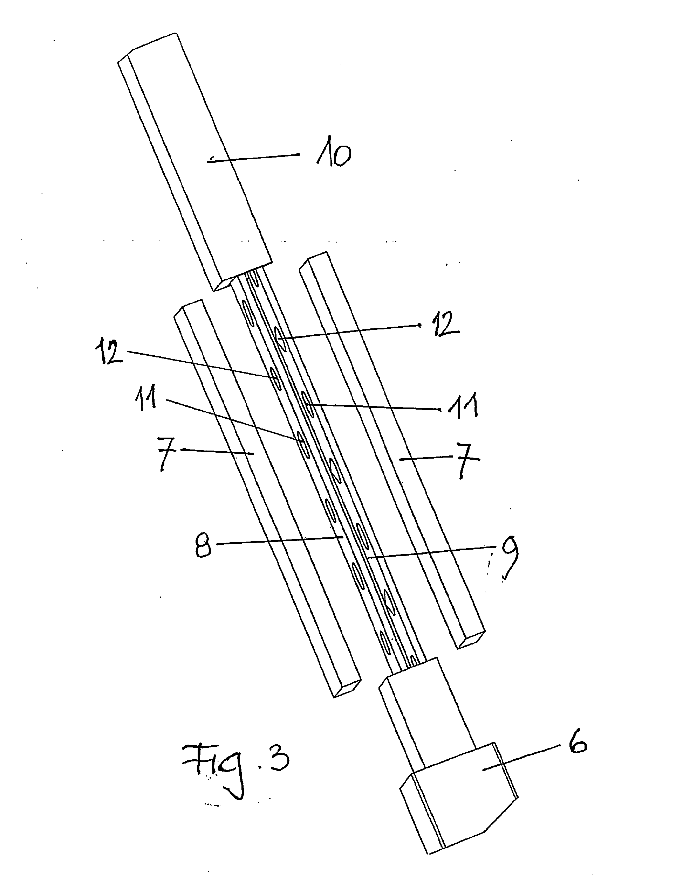

The build and structure of the heating body according to the invention and to a preferred embodiment thereof shall now be described with reference to Fig. 2 and Fig. 3. The housing 6 of the heating body 3 is a hollow rectangular pipe. Along two opposite inner walls of the housing 6, pairs of heating elements 7 and spacers 10 are alternately inserted. The heating elements 7 are made of PTC ceramics and are lamella- shaped. While the heating elements 7 and the spacers 10 are being inserted, a first contact lamella 8 and a second contact lamella 9 are inserted between the opposite heating elements 7. Said two lamellae 8 and 9 are inserted into grooves of the spacers 10 so as to render any electrical contact with the housing 6 impossible. The lamellae 8 and 9 are made of an electrically conductive material capable of plastic deformation. In the embodiment shown herein, the lamellae 8 and 9 are provided with alternating holes 11 and lugs 12 along their longitudinal axes. The step distance i.e. the spacing apart of the consecutive holes 11 and lugs 12 is such that there exist at least two holes 11 and two lugs 12 per heating element. While the heating elements 7 and the spacers 10 are being inserted into the interior of the housing 6, the lamellae 8 and 9 are reciprocally positioned in such a manner that the lugs 12 of the lamella 8 engage with the holes 11 of the lamella 9. In the same manner, the lugs 12 of the lamella 9 engage with the holes 11 of the lamella 8. In this relative position the lamellae 8 and 9 fit closely together along their entire surface and length. Accordingly, their overall thickness is small and is the sum of the thicknesses of both the lamellae 8 and 9. After inserting the elements 7 and the spacers 10 into the housing 6, one of the lamellae, say the first lamella 8, is partially pulled out, so that the lugs 12 of the lamella 8 are lifted out of the holes 11 of the lamella 9 and abut upon the surface of the lamella 9. Likewise, the lugs 12 of the lamella 9 are lifted out of the holes 11 of the lamella 8 and abut upon the surface of the lamella 8. The mutual distance and consequently the overall thickness of the lamellae 8 and 9 is thereby increased for the height of the lugs 12. The lamellae 8 and 9 thus press on the heating elements 7. That way, the heating elements 7 come into close electrical and thermal contact with the walls of the housing 6 and into electrical contact with the lamellae 7 and 8. The respective lengths of the lamellae 8 and 9 are different enough to allow a grip of the lamellae prior to their extraction. After the extraction both ends of the lamellae are resistance welded to one another to prevent the lamellae from possibly returning to their original position(s). Both ends of the lamellae 8 and 9 thus jointly constitute the electrical connection 13.

The invention also provides a process of manufacturing an electric heater wherein the insertion of the heating elements 7, the spacers 10 and the lamellae 8, 9 takes place after the soldering of the fins 4 to the housings 6 of the heating bodies 3.

Therefore, the inventive heater does not include springs or plastically deformed elements and provides for simple insertion of the heating elements, the lamellae and the spacers subsequent to the soldering of the fins to the housings of the heating bodies - rectangular pipes. A high quality and lasting electrical and thermal contact is thus provided, as well as a simple way of assembling.

## Claims

1. Electric heater for heating automotive passenger compartments, wherein heating elements (7) are made of PTC ceramics in the shape of lamellae and wherein the heater has fins (4) mounted over heating bodies (3) for the purpose of increasing the surface of the said heater, wherein along two opposite inner walls of a housing (6) of the heating body (3), pairs of the heating elements (7) and spacers (10) are alternately inserted, whereas two contact lamellae (8, 9) are inserted between the opposite heating elements (7), **characterized in that** the surfaces of the contact lamellae (8, 9) abut upon each other and the two contact lamellae (8, 9) are provided with alternating holes (11) and lugs (12) along their longitudinal axes.

2. Electric heater according to one of the preceding claims, wherein at least two holes (11) and two lugs (12) exist per each heating element (7).

3. Electric heater according to one of the preceding claims, wherein the two lamellae (8, 9) are electrically conductive.

4. Electric heater according to the preceding claims, wherein the ends of the lamellae (8, 9) jointly constitute an electrical connection (13).

5. Electric heater according to one of the proceeding claims, wherein the fins (4) are soldered to the heating bodies (3).

6. Electric heater according to one of the proceeding claims, wherein the heating elements (7) are in close electrical and thermal contact with the contact lamellae (8, 9).

7. Electric heater according to one of the proceeding claims, wherein a lug (12) of the contact lamella (9) abuts upon the surface of the contact lamella (8).

8. A method of manufacturing an electric heater for heating automotive passenger compartments, wherein heating elements (7) are made of PTC ceramics in the shape of lamellae and wherein the heater has fins (4) mounted over heating bodies (3) for the purpose of increasing the surface of the said heater, wherein the insertion of the heating elements (7), spacers (10) and contact lamellae (8, 9) to the housings (6) of the heating bodies (3) takes place after the soldering of the fins (4) to the heating bodies (3) and whereby the contact lamellae (8, 9) comprise surfaces which abut each other, and the two contact lamellae (8, 9) are provided with alternating holes (11) and lugs (12) along their longitudinal axis.

9. The method of claim 8, wherein after inserting the heating elements (7) one of the contact lamellae (8, 9) is partially pulled out, so that the contact lamellae (8, 9) press on the heating elements (7).

## Patentansprüche

1. Elektrische Heizvorrichtung zum Beheizen von Fahrgasträumen von Kraftfahrzeugen, wobei Heizelemente (7) aus PTC-Keramik in Form von Lamellen bestehen und die Heizvorrichtung Rippen (4) aufweist, die über Heizkörpern (3) angebracht sind, um die Oberfläche der Heizvorrichtung zu vergrößern, an zwei einander gegenüberliegenden Innenwänden eines Gehäuses (6) des Heizkörpers (3) Paare der Heizelemente (7) und Abstandshalter (10) abwechselnd eingesetzt sind und dabei zwei Kontakt-Lamellen (8, 9) zwischen die einander gegenüberliegenden Heizelemente (7) eingesetzt sind, **dadurch gekennzeichnet, dass** die Oberflächen der Kontakt-Lamellen (8, 9) aneinander anliegen und die zwei Kontaktlamellen (8, 9) mit abwechselnden Löchern (11) und Vorsprüngen (12) entlang ihrer Längsachsen versehen sind.

2. Elektrische Heizvorrichtung nach einem der vorangehenden Ansprüche, wobei wenigstens zwei Löcher (11) und zwei Vorsprünge (12) für jedes Heizelement (7) vorhanden sind.

3. Elektrische Heizvorrichtung nach einem der vorangehenden Ansprüche, wobei die zwei Lamellen (8, 9) elektrisch leitend sind.

4. Elektrische Heizvorrichtung nach einem der vorangehenden Ansprüche, wobei die Enden der Lamellen (8, 9) zusammen eine elektrische Verbindung (13) bilden.

5. Elektrische Heizvorrichtung nach einem der vorangehenden Ansprüche, wobei die Rippen (4) an den Heizkörpern (3) angelötet sind.

6. Elektrische Heizvorrichtung nach einem der vorangehenden Ansprüche, wobei die Heizelemente (7) in engem elektrischem und thermischem Kontakt mit den Kontakt-Lamellen (8, 9) sind.

7. Elektrische Heizvorrichtung nach einem der vorangehenden Ansprüche, wobei ein Vorsprung (12) der Kontakt-Lamelle (9) an der Oberfläche der Kontakt-Lamelle (8) anliegt.

8. Verfahren zum Herstellen einer elektrischen Heizvorrichtung zum Beheizen von Fahrgasträumen von Kraftfahrzeugen, wobei Heizelemente (7) aus PTC-Keramik in Form von Lamellen bestehen und die Heizvorrichtung Rippen (4) aufweist, die über Heizkörpern (3) angebracht sind, um die Oberfläche der Heizvorrichtung zu vergrößern, das Einführen der Heizelemente (7), Abstandshalter (10) und Kontakt-Lamellen (8, 9) in die Gehäuse (6) der Heizkörper (3) nach dem Anlöten der Rippen (4) an den Heizkörpern (3) stattfindet und die Kontakt-Lamellen (8, 9) Flächen umfassen, die aneinander anliegen, und die zwei Kontakt-Lamellen (8, 9) mit abwechselnden Löchern (11) und Vorsprüngen (12) entlang ihrer Längsachse versehen sind.

9. Verfahren nach Anspruch 8, wobei nach Einführen der Heizelemente (7) eine der Kontakt-Lamellen (8, 9) teilweise herausgezogen wird, so dass die Kontakt-Lamellen (8, 9) auf die Heizelemente (7) drücken.

## Revendications

1. Chauffage électrique pour chauffer des compartiments automobiles pour passagers, étant précisé que des éléments chauffants (7) sont en céramique CTP et ont la forme de lamelles, et que le chauffage a des ailettes (4) montées sur des corps chauffants (3) pour augmenter la surface dudit chauffage, et étant précisé que le long de deux parois intérieures opposées d'un boîtier (6) du corps chauffant (3), des paires d'éléments chauffants (7) et des pièces d'écartement (10) sont placées en alternance, tandis que deux lamelles de contact (8, 9) sont placées entre les éléments chauffants (7) opposés, **caractérisé en ce que** les surfaces des lamelles de contact (8, 9) butent les unes contre les autres et les deux lamelles de contact (8, 9) sont pourvues de trous (11) et de saillies (12) qui alternent le long de leur axe longitudinal.

2. Chauffage électrique selon l'une des revendications précédentes, dans lequel il y a au moins deux trous (11) et deux pattes (12) pour chaque élément chauffant (7).

3. Chauffage électrique selon l'une des revendications précédentes, dans lequel les deux lamelles (8, 9) sont conductrices d'électricité.

4. Chauffage électrique selon l'une des revendications précédentes, dans lequel les extrémités des lamelles (8, 9) constituent conjointement une connexion électrique (13).

5. Chauffage électrique selon l'une des revendications précédentes, dans lequel les ailettes (4) sont soudées aux corps chauffants (3).

6. Chauffage électrique selon l'une des revendications précédentes, dans lequel les éléments chauffants (7) sont en contact électrique et thermique étroit avec les lamelles de contact (8, 9).

7. Chauffage électrique selon l'une des revendications précédentes, dans lequel une saillie (12) de la lamelle de contact (9) bute sur la surface de la lamelle de contact (8).

8. Procédé pour fabriquer un chauffage électrique pour chauffer des compartiments automobiles pour passagers, étant précisé que des éléments chauffants (7) sont en céramique CTP et ont la forme de lamelles, quelle chauffage a des ailettes (4) montées sur des corps chauffants (3) pour augmenter la surface dudit chauffage, que la mise en place des éléments chauffants (7), des pièces d'écartement (10) et des lamelles de contact (8, 9) sur les boîtiers (6) des corps chauffants (3) a lieu après le soudage des ailettes (4) sur les corps chauffants (3), que les lamelles de contact (8, 9) comprennent des surfaces qui butent l'une sur l'autre, et que les deux lamelles de contact (8, 9) sont pourvues de trous (11) et de saillies (12) qui alternent le long de leur axe longitudinal.

9. Procédé de la revendication 8, selon lequel après la mise en place des éléments chauffants (7), l'une des lamelles de contact (8, 9) est partiellement retirée, de sorte que les lamelles de contact (8, 9) appuient sur les éléments chauffants (7).
